# DEMANDE DE BREVET EUROPEEN

(11) **EP 1 582 432 A1**
(43) Date de publication de la demande: **05.10.2005**
(21) Numéro de dépôt: 05290692.2
(22) Date de dépôt: 29.03.2005
(51) Int. Cl.: B62B 3/14

(54) **Support pour affichage publicitaire et ensemble comprenant le support et un chariot roulant**

(30) Priorité: 29.03.2004 FR 0403240
(71) Demandeur: Mahe, Gérard, 93600 Aulnay sous Bois (FR)
(72) Inventeur: Mahe, Gérard, 93600 Aulnay sous Bois (FR)
(74) Mandataire: Pichat, Thierry

(57) **Abrégé**

Il s'agit d'un support (10) pour l'affichage d'un message publicitaire sur un chariot (1), comprenant au moins un bras transversal (27) reliant fixement au moins un panneau et des moyens (13, 15) de liaison au chariot, de telle manière que dans une position opérationnelle de présentation du message (23) affiché, les mains d'un utilisateur, placées autour de la barre (5) de poignée du chariot, puissent être engagées à travers le support, la surface d'affichage définie sur l'un des panneaux étant alors placée au-dessus de la poignée (5), suivant une disposition sensiblement horizontale ou inclinée en direction des yeux de l'utilisateur.

## Description

L'invention concerne un support d'affichage publicitaire pour un chariot roulant, de supermarché ou de gare/aéroport en particulier, ainsi qu'un ensemble comprenant le chariot et le support.

Les chariots de supermarché sont des dispositifs bien connus, largement répandus que les consommateurs utilisent pour faire leurs achats. En gare/aéroport, on y place des bagages.

L'invention a pour objet de proposer un support d'affichage, en particulier pour un message publicitaire, susceptible d'être adapté sur un chariot roulant.

Dans ce contexte, la solution proposée par l'invention consiste donc en particulier en un ensemble comprenant :
- le chariot roulant qui comprend:
   * une première barre sensiblement horizontale prévue pour les mains de l'utilisateur poussant ledit chariot et définissant ainsi une poignée de manoeuvre,
   * et une deuxième barre située plus bas que la première et orientée sensiblement parallèlement à elle,
- et un support d'affichage comprenant :
   * (au moins) un plateau d'affichage où est situé le (un) message à présenter,
   * et des moyens de liaison entre le support et le chariot.

Dans une premier version intéressante :
- lesdits moyens de liaison comprennent un premier étrier, ou groupe d'étriers, s'étendant autour de la première barre du chariot, et un deuxième étrier, ou groupe d'étriers, s'étendant autour de la deuxième barre, ces premier et second (groupes d') étriers présentant respectivement une forme en berceau avec des ouvertures orientées suivant des directions différentes,
- les premier et second étriers, ou groupes d'étriers sont intégrés au support d'affichage,
- et le deuxième étrier, ou deuxième groupe d'étriers, présente, dans l'état du support d'affichage porté par le chariot roulant, soit une ouverture orientée vers l'extérieur, à la manière donc d'une fourchette, soit une forme en crochet crochetant la seconde barre.

Dans une autre version, on prévoit que le support d'affichage se présente comme une structure en au moins deux dimensions présentant au moins une ligne de pliage. Cette structure sera avantageusement typiquement obtenue à partir d'une plaque plane ou essentiellement plane en carton, ou préférentiellement en plastique rigide ou semi-rigide pliable plusieurs fois sans se déchirer. La plaque sera pliée de préférence en plusieurs endroits pour définir dans ce cas une forme en trois dimensions définissant localement ledit plateau d'affichage du message et les moyens de liaison (par exemple des orifices adaptés pour recevoir des liens à placer autour de l'une et/ou l'autre desdites barres du chariot)

En liaison avec un support d'affichage conforme à ce qui est proposé, d'autres buts visés sont les suivants, à prendre individuellement ou en combinaison :
- solidité du support qui doit pouvoir résister à des actes de vandalisme,
- facilité de mise en place / éventuel retrait vis à vis du chariot,
- sécurité de fixation du support au chariot,
- coût de fabrication réduit,
- ergonomie/agrément de la présentation du support vis-à-vis du chariot et du message.
- standardisation du support pour une intégration facile, simple et peu onéreuse sur différents types de chariots (supermarché, gares...).

Les caractéristiques des revendications annexées concourent à résoudre tout ou partie des problèmes ci avant évoqués, sans prétention d'ordre d'importance et avec la possibilité de les considérer individuellement ou en combinaison.

Si les moyens de fixation chariot/support d'affichage comprennent des étriers, lorsque la barre de poignée du chariot sera engagée dans le premier étrier, le second étrier (lui-même alors placé autour de la deuxième barre du chariot) sera avantageusement retenu ainsi, bloqué; seul le dégagement du premier étrier permettant de dégager le second.

Concernant la proposition d'une structure à au moins deux dimensions présentant au moins une ligne de pliage obtenue, de façon privilégiée, à partir d'une plaque essentiellement plane, rigide ou semi-rigide, pliable plusieurs fois sans se déchirer, on notera qu'elle est considérée comme susceptible d'être protégeable en tant que telle avec, si nécessaire, les caractéristiques complémentaires présentées en relation avec elle dans la présente demande. La même remarque peut être faite vis-à-vis de la solution en fil(s) métallique(s) et à crochets ci-après présentée plus en détails, ces deux versions répondant, sur certains aspects, à une autre approche.

D'ailleurs, une description détaillée de certains exemples de réalisation suit, en référence aux dessins annexés dans lesquels :
- la figure 1 montre schématiquement un chariot de supermarché équipé d'un support d'affichage conforme à l'invention,
- la figure 2 montre en vue agrandie du support de la figure 1,
- la figure 3 est une vue locale en coupe transversale d'une variante de réalisation du premier étrier, (plan III-III de la figure 1), en supposant toujours le support installé sur le chariot (dont une partie est représentée en traits mixtes),
- les figures 4, 5, 6 montrent à différentes échelles trois variantes de réalisation d'un support d'affichage,
- les figures 7, 8 et 9 montrent trois variantes de second étrier,
- et les figures 10, 11 et 12 montrent à différentes échelles trois autres variantes d'un support d'affichage réalisé à partir d'une plaque rigide pliée.

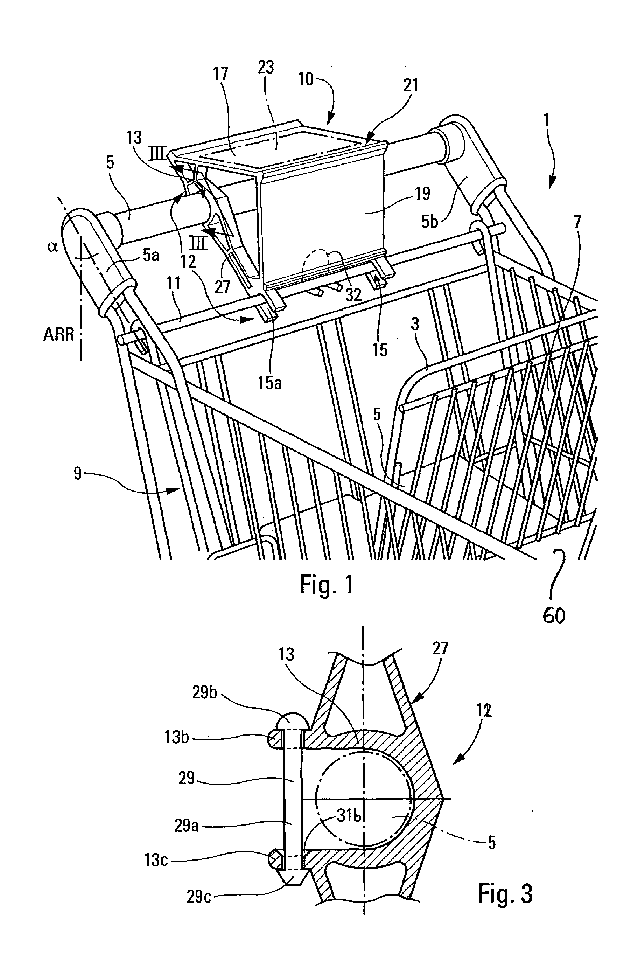

Sur la figure 1, on voit un chariot roulant, ici de supermarché 1, monté sur roues et manoeuvrable à partir d'une poignée 5 consistant en une barre s'étendant horizontalement sur la largeur du chariot, légèrement à l'écart et au dessus du volume de chargement 7 du chariot réservé au(x) produit(s) à transporter (voir à un enfant assis si le volet pivotant 3 définissant le siège 5 a été déployé).

Le volume 7 est délimité par une cage 9 en fils métalliques, typiquement en croisillons.

En partie supérieure de son côté arrière (ARR) le plus haut, on remarque une deuxième barre horizontale 11 située également juste au dessus de la cage 9 et légèrement en avant de la première barre de poignée 5 et en contrebas (angle α d'environ 30 à 55 degrés par rapport à la verticale).

La poignée 5 est fixée latéralement à des bras latéraux 5a, 5b du chariot fixés (typiquement soudés) à la cage 9.

La barre 11 est fixée (typiquement soudée), à ses extrémités latérales, aux bras 5a, 5b et constitue le fil métallique du chariot le plus haut par rapport aux autres fils de la cage et le plus près de la poignée 5 parallèlement à laquelle elle s'étend, a priori sur la même longueur.

Les première et seconde barres 5,11 sont immédiatement proches l'une de l'autre et appartiennent à un plan commun qui est incliné par rapport à l'horizontale et la verticale.

Le chariot 1 porte un support 10 conforme à l'invention.

Dans l'exemple illustré, il s'agit d'une sorte de petit pupitre équipé de moyens de liaison 12 pour le lier au chariot en l'y fixant de manière malgré tout séparable, de préférence, sans toutefois que cette possible séparation soit trop aisée pour éviter les actes de vandalisme.

La liaison entre le support 10 et le chariot 1 est obtenue de préférence par deux groupes d'étriers 13, 15 (voir également figure 2) adaptés pour prendre appui, par dessus, respectivement sur la poignée 5 et sur la deuxième barre 11 du chariot, en se calant autour d'elles, pour adopter une position stable comme illustrée figures 1 et 2, conformément à la réalité (éventuellement à l'inclinaison près du pupitre 10).

Outre les étriers 13, 15, ce support d'affichage 10 comprend deux plateaux (panneaux d'affichage 17, 19) sensiblement plans définissant une cornière sensiblement en "L", 21.

Sur l'un au moins des plateaux 17, 19, on peut placer le message (ou information) à afficher, 23 (figure 1).

Il peut en particulier s'agir d'une étiquette ou d'un petit panneau publicitaire qu'on peut fixer sur le plateau concerné (par exemple coller).

De préférence, le message 23 sera placé sur le dessus du plateau 17 qui, comme montré figure 1, est, en position stable du support d'affichage 10, placé sur le chariot en étant orienté légèrement de biais, vers les yeux de l'utilisateur du chariot en train de le pousser, avec ses mains 25 sur la poignée 5 (figure 2).

Le plateau 17 et les premiers et seconds étriers 13,15 s'étendent sensiblement, l'un dans un premier plan 13A, les autres dans un second plan 16A, ces deux plans étant concourants le long du sommet 20 et définissant entre eux un angle non nul.

Pour la solidité du support 10 et sa liaison avec le chariot, un barreau 27 (de préférence deux, un à chaque bout, latéralement) sensiblement rectiligne(s) joint (joignent) les extrémités libres des panneaux 17, 19, de façon à former en quelque sorte un triangle en vue de côté (à gauche ou à droite).

Le (chaque) barreau 27 est entretoisé pour la solidité, tout en présentant donc une structure en quelque sorte "alvéolaire" pour diminuer le poids.

En partie intermédiaire, entre les panneaux, le (chaque) barreau 27 comprend (intègre) le premier étrier 13 dont l'ouverture 13a est tournée à l'opposé des panneaux 17, 19.

Le (chaque) second étrier 15 est situé du côté du deuxième panneau 19 le plus incliné en position normale d'utilisation du support 10, comme sur la figure 1.

Comme celle 13a de l'étrier 13, l'ouverture 15a de l'étrier 15 est alors dirigée vers le bas. Les deux ouvertures 13a, 15a s'étendent suivant des directions (respectivement 130,150) transversales (perpendiculaires) l'une à l'autre, pour se bloquer mutuellement.

Les ouvertures 15a des deux étriers 15 s'étendent chacune suivant sensiblement le plan 16A, à l'extrémité du support opposée au sommet 20.

Ici, l'étrier (chaque étrier) 15 s'étend de préférence dans la continuité axiale du barreau 27 concerné, avec bien entendu son ouverture 15a d'extrémité tournée vers l'extérieur.

Deux étriers 13, 15 d'un même barreau 27 forment alors sensiblement un angle droit entre eux.

De préférence, le support 10 est monobloc, en plastique dur moulé (injecté), qui peut être transparent ou fumé.

Les étriers 13, 15 sont alors intégrés, comme les barreaux 27 à la structure générale du support.

Egalement de préférence, le support 10 comprend deux groupes de barreaux 27 et étriers 13, 15 situés respectivement aux deux extrémités latérales de la cornière 21.

En variante, on aurait éventuellement pu prévoir un seul barreau de liaison suffisamment large pour assurer l'équilibre de la cornière, un seul groupe d'étriers 13, 15 pouvant alors être prévu.

La forme préférée « en berceau » des étriers favorise le montage et la retenue naturelle du support vis-à-vis du chariot.

L'ouverture de l' (chaque) étrier 15 est en "U", celle de l' (chaque) étrier 13 pouvant l'être également, ou en "C" (comme sur les figures 1 et 2), avec alors une certaine élasticité des branches du "C" pour son engagement autour de la barre 5 (voir forme de la figure 2 qui nécessite une matière plastique ayant une certaine élasticité pour déformer le col d'ouverture de l'étrier 13 illustré).

Une fois les étriers 13, 15 engagés respectivement autour des barres 5, 11 du chariot (la barre 11 étant avantageusement celle qui est la plus proche de la poignée 5, en s'étendant parallèlement à elle), le plateau supérieur 17 est donc sensiblement horizontal ou légèrement incliné vers les yeux de l'utilisateur du chariot en train de le pousser via la poignée 5.

Les mains 25 peuvent pénétrer alors à l'intérieur du "V" que forme la cornière 21 rabattue sensiblement à l'horizontale et donc ouverte vers la poignée comme on le voit clairement sur les figures 1 et 2.

Pour sécuriser la liaison entre le support et le chariot, au moins une pièce de blocage ou de verrouillage 29 est avantageusement prévue, de préférence pour coopérer avec le (chaque) étrier 13.

Il s'agit alors d'une pièce difficilement retirable qui bloque l'étrier à l'arrière en s'engageant face à la barre 5, en face de l'étrier concerné et qui va coopérer avec lui pour empêcher son retrait.

Sur la figure 3, la pièce de verrouillage 29 se présente comme une épingle droite autobloquante.

L'épingle 29 présente un corps 29a pourvu, à une extrémité, d'une tête élargie plate 29b et, à l'extrémité opposée, d'un embout d'engagement chanfreinés 29c (en espèce pyramidale ou tronconique), éventuellement fendu.

Deux ailes 13b, 13c prolongent les branches latérales de l'étrier en "U" 13 pour laisser la place chacun à un orifice (respectivement 31a, 31b) où est engagée à force l'épingle 29, par son embout effilé 29c.

Pour mettre en place le support d'affichage 10, on glisse d'abord 1' (chaque) étrier 15 autour de la barre 11, et ce librement (mais avec uniquement un léger jeu de préférence). On fait ensuite pivoter le support 10 vers la barre de poignée 5 pour engager cette barre dans l' (chaque) étrier 13, la profondeur "1" des étriers 15 permettant cela sans que la barre 11 en sorte, l'engagement des étriers 13 étant soit effectué à force (solution de la figure 2) soit relativement librement (figure 3). Chaque étrier 13 bloque un étrier 15 vis-à-vis de la barre 11.

Dans le cas de la figure 3 où l'engagement est plutôt libre, on sécurise la mise en place du support 10 en plaçant la pièce de verrouillage 29 qui empêche la barre de poignée 5 de sortir de l'étrier 13, sans forcer par un outil sur cette pièce de verrouillage ou sans la casser.

Le support d'affichage 10 est alors dans sa position de la figure 1. Le message affiché en 23 est visible aux yeux de l'utilisateur du chariot 1.

Au moins dans certains cas, on pourra avoir intérêt à laisser un léger jeu entre les étriers et les barres 5, 11, pour permettre un coulissement (de préférence sous un certain effort) du support d'affichage 10 le long des dites barres, pour le positionner longitudinalement à l'endroit le plus approprié de la barre de poignée 5.

A cet égard, on notera que dans sa position opérationnelle sur le chariot (figures 1 et 2), le support d'affichage 10 est tel que les étriers 15, et en particulier leur profondeur 1, est (sont) adapté pour que le panneau 19 soit situé suffisamment à l'écart de la barre 11 (en l'espèce au-dessus d'elle) pour ne pas empêcher l'utilisation du crochet porte-sac 32 (figure 1) .

Le support 10 ne gène au demeurant pas non plus l'accès au système de verrouillage par clé prévu sur chaque chariot pour leur retenu mutuel, lorsqu'ils sont stockés sur parc.

Bien entendu, les dimensions, notamment en longueur, ainsi que les formes (en C, U...) des étriers 13,15 seront adaptées aux caractéristiques des chariots 1 (barres de réception rondes, ovales..., écartements entres elles...).

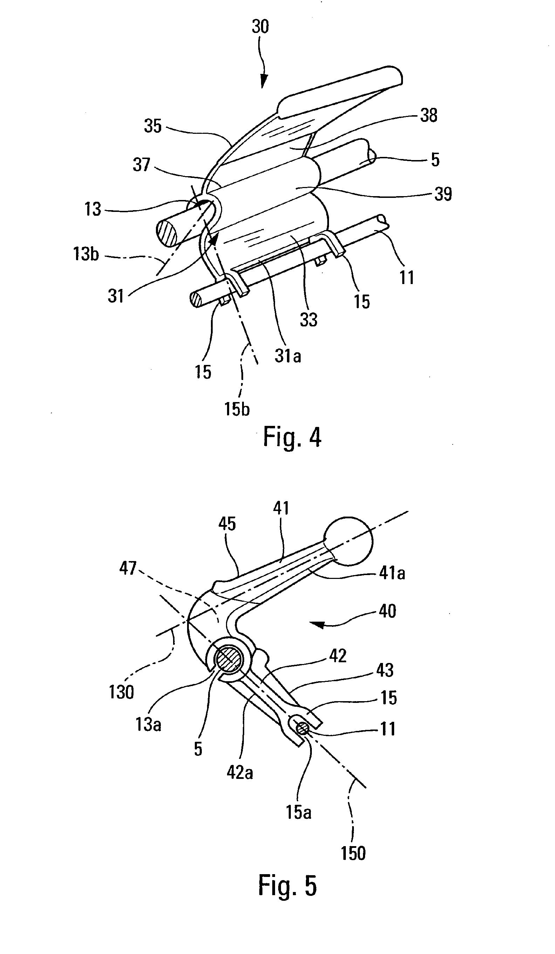

Sur la figure 4, le mode de réalisation illustré montre un support d'affichage 30 toujours en matière plastique moulée, avec toujours des étriers 13, 15 ouverts transversalement l'un à l'autre (axes respectivement 13b, 15b).

La paire d'étrier située à l'extrémité libre 31a de la partie 31 par où le support se fixe au chariot jouxte un panneau 33 qui peut constituer une surface d'affichage à priori complémentaire de celle 35 qui s'étend inclinée par rapport à l'horizontale et la verticale, au-dessus de la partie 31 (elle-même inclinée), en position opérationnelle du support, avec ses étriers 13, 15 ici disposés et élastiquement retenus autour, respectivement, des barres 5, 11 du chariot.

On aura compris que les parties (ou panneaux) 31, 35 définissent un "V" et s'étendant donc globalement dans deux plans concourant, réunis à une extrémité (sommet) .

Entre la base du panneau supérieur d'affichage 35 et le sommet 37 du V (zone de l'étrier 13), on note une ouverture 38 allongée horizontalement, suffisamment large pour laisser les mains de l'utilisateur qui peut ainsi accéder à la barre de poignée 5, ou plus exactement ici (ce qui revient au même) au bourrelet arrondi 39 qui définit en dessous, sur sa surface concave, l'étrier "C" 13.

Cet étrier 13 situé donc à proximité du sommet du "V" est unique et s'étend ainsi sur sensiblement toute la largeur du support.

Sur la figure 5, on retrouve un support en "V" 40 avec un premier plan incliné 41a dans lequel s'étend le panneau d'affichage 41 et un second plan transversal 42a dans lequel s'étend un second panneau 42 qui intègre les étriers 13, 15, lesquels s'étendent sur toute la largeur du support.

Le support 40 est monobloc, en plastique.

Une seconde surface d'affichage 43 complète la première surface frontale 45 (panneau 41).

Une ouverture 47 pour les mains est avantageusement à réserver à proximité immédiate du sommet du "V".

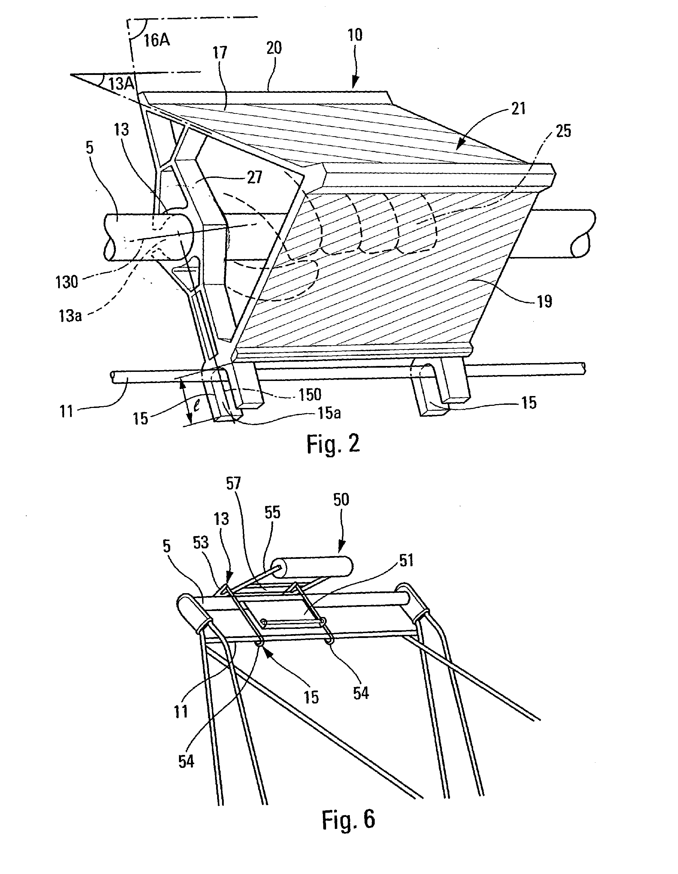

Sur la figure 6, le support 50 illustré est essentiellement en fila(s) métallique(s).

Son plateau, ou panneau, inférieur 51 intègre à ses extrémités opposées parallèle aux barres 5, 11 du chariot, des parties extrêmes de fils 53, 54 recourbées qui définissent respectivement autour des barres 5 et 11, les étriers 13 et 15, lesquels présentent ainsi chacun une forme en crochet, dans l'état recourbé des fils concernés.

Ainsi, le support 50 comprend deux paires d'étriers, respectivement 13, 15.

On aura compris qu'il s'agit donc de fils déformables/pliables dont on n'est venu replier chaque extrémité pour installer et maintenir le support 50 autour des barres 5, 15 du chariot.

Au-dessus, également de biais, s'étend le second panneau 55 du support servant donc à l'affichage du message sur la surface supérieure dirigée vers les yeux de l'utilisateur.

Les deux panneaux 51, 55 sont réunis à l'avant (vers l'utilisateur), la zone des étriers frontaux 13 étant légèrement proéminentes par rapport au panneau 51 qui est donc légèrement en retrait.

Toute la structure du support peut être en fils auxquels on a par exemple fixé une plaque pour supporter le message publicitaire.

Un passage 57 pour les mains, en partie basse du panneau 55 (c'est-à-dire entre la panneau d'affichage en lui-même et la zone des étriers 13) est prévu.

Le(s) panneaux d'affichage 17,35,41,42... pourraient comprendre des écrans d'affichage (type moniteur) sonore et/ou visuel et/ou tout appareillage électronique jugé approprié.

Eventuellement, la surface d'affichage du message pourrait, sur le support, être située plus bas que les étriers, le « V » (ou la cornière) formé(e) s'étendant alors vers le bas et non pas vers le haut comme sur les figures.

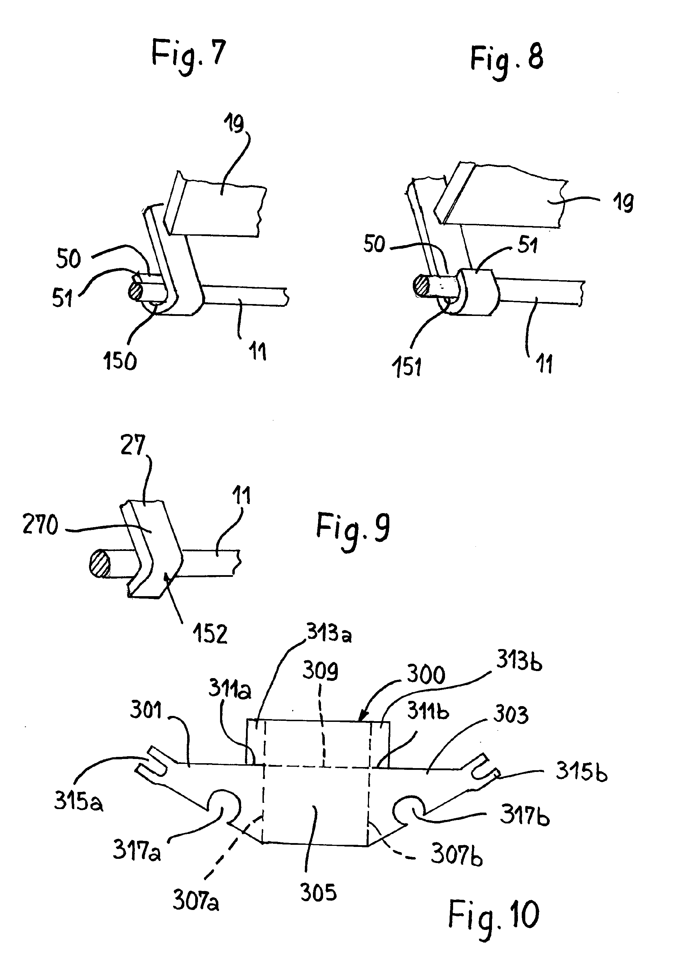

Les figures 7 et 8 correspondent à deux alternatives possibles dans la réalisation des seconds étriers, en remplacement de ceux repérés 15 sur la figure 2.

Le second étrier illustré, repéré respectivement 150 et 151, se présente ici comme un crochet replié sur lui-même, sensiblement en U, de manière que la seconde barre 11 du chariot vienne s'engager dans l'ouverture 50 du crochet et y soit retenue consécutivement à l'engagement du premier étrier (non représenté ici), les étriers se bloquant l'un l'autre.

En combinaison avec le premier étrier, un tel crochet, avec donc une extrémité 51 de barreau recourbée sur elle-même vers le plateau d'affichage 19, assure donc une retenue performante.

L'engagement peut s'effectuer par un contournement de la barre 11, par le crochet, vers le bas (figure 7) ou vers le haut (figure 8).

Figure 7, l'extrémité 51 est au-dessus de la barre 11, figure 8 en dessous.

Par assimilation avec la réalisation de la figure 2, le deuxième étrier de la paire d'étriers 150 ou 151, est identique au premier, mais situé de préférence à l'autre extrémité latérale de l'avant du plateau 19, encore qu'une disposition dans la continuité des panneaux 33 (figure 4) ou 42 (figure 5) est envisageable.

On aura remarqué que ce qui différencie les solutions des figure 2, d'une part, et 7 et 8 d'autre part, est le sens d'engagement des seconds étriers : vers l'avant fig.2 (c'est-à-dire vers la cuve 60 de stockage des denrées dans le chariot sur la figure 1), vers l'arrière (en direction de la première barre ; 5 fig.1) sur les figures 7 et 8, pour le crochetage de la barre 11.

Figure 9, l'extrémité en crochet 152 du second étrier engagé autour de la deuxième barre 11 est une cornière sensiblement en L, ici engagée par dessus la barre 11 pour créer un appui favorable sur cette barre, vers le bas, par la partie supérieure 270 du barreau 27 située à l'extrémité en crochet.

Bien entendu, les formes des branches des étriers et/ou crochets pourront être autres que figurées, de même que leurs orientations. Des étriers 13,15 identiques sont ainsi possibles, par exemple.

Figure 10, on voit une plaque, ou un à plat, 300, rigide ou semi-rigide, en plastique, tel que polyéthylène (PE), ou en carton enduit de plastique, susceptible d'être plié(e) sans se déchirer pour devenir un support d'affichage comparable à celui des figures précédentes.

La plaque 300, développée à plat fig.10, comprend ici plusieurs plis (tranversaux) pour définir une forme en trois dimensions, une fois pliée.

Elle comprend deux ailes latérales 301,303 opposées et une partie centrale 305. Les ailes latérales intègrent les zones de fixation au chariot.

Les lignes de pliures 307a,307b parallèles entre elles s'étendent entre deux bords opposés de la plaque et permettent de rabattre latéralement, à 90°, les deux ailes sur les côtés du support. La ligne perpendiculaire 309 qui rejoint les lignes 307a,307b à ses extrémités permet, avec elles, de donner la forme ici voulue en trois dimensions.

La ligne de pliure 309 relie coaxialement les lignes de pliure découpées 311a,311b et sépare en deux surfaces la zone 305. Ainsi, une fois le tout plié, l'aile 301 recouvre la bande latérale 313a, de même pour l'aile symétrique 303 qui se place par dessus la bande latérale 313b, ces bandes 313a,313b étant limitées intérieurement et perpendiculairement par les lignes 307a,307b et 311a,311b.

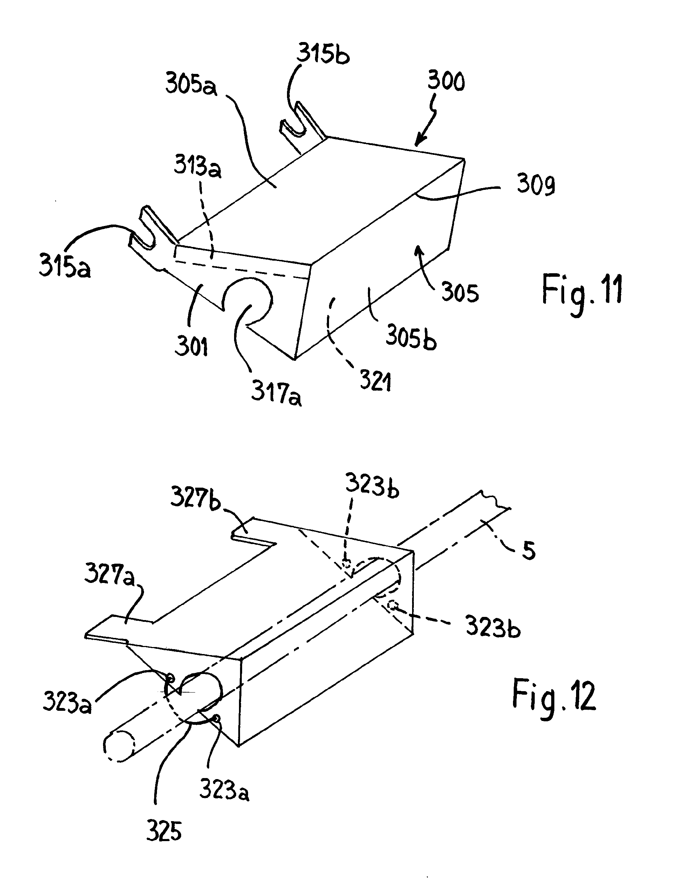

De la colle ou tout autre moyen de liaison solidarisera favorablement chaque aile et sa bande latérale pour atteindre la forme de la figure 11.

Les ouvertures ou zones de fixation, ici quatre, chacune en forme d'étrier comprennent les découpes 315a,315b (étriers avant à placer autour de la barre 11) et 317a,317b (étriers arrière à placer autour de la barre transversale arrière ou poignée 5 du chariot).

Avec les deux surfaces plates 305a,305b séparées par la ligne de pliure 309 et définissant donc une forme de toit à double pente, on a deux surfaces d' affichage, celle 305b venant face à l'utilisateur du chariot, une fois en place. Compte tenu du décalage en hauteur entre ce toit et les zones d'étriers 317a,317b, l'utilisateur peut alors glisser ses mains sous le toit, dans le creux du « L » ainsi formé (espace caché 321, fig.12).

D'autres moyens de fixation pourraient être prévus, tels que des perforations 323a,323b illustrées, pour l'un des côtés fig.12, comme recevant un lien de serrage 325 entourant étroitement la barre 5 du chariot. Des pattes frontales 327a,327b bloquent le support en rotation contre l'autre barre transversale (11 fig.1). Bien entendu, fig.12, la forme a été obtenue à partir d'une feuille ou plaque relativement rigide à plat, telle qu'une plaque de 0,5mm à 1mm d'épaisseur en PE ou PP, polypropylène.

Des moyens de serrage, tels que ces liens, viendront utilement compléter les étriers 315a,...317b de la fig. 11.

A noter que ces solutions de plaques globalement planes et assez rigides, mises en forme par pliage(s) sont ici considérées comme protégeables en elles-mêmes, éventuellement de façon distincte des solutions précédentes à structure monobloc moulée.

## Revendications

1. Ensemble pour l'affichage d'un message, en particulier un message publicitaire, sur un chariot roulant, cet ensemble comprenant :
- le chariot roulant qui comprend:
* une première barre (5) sensiblement horizontale prévue pour les mains de l'utilisateur poussant ledit chariot et définissant ainsi une poignée de manoeuvre,
* et une deuxième barre (11) située plus bas que la première et orientée sensiblement parallèlement à elle,
- et un support (10,30,40,50,300) d'affichage qui comprend :
* (au moins) un plateau d'affichage (17,35,55,305) où est situé le message à présenter,
* et des moyens (13,15,315a,315b,317a,317b) de liaison entre le support et le chariot.

2. Ensemble selon la revendication 1, **caractérisé en ce que** :
- lesdits moyens de liaison comprennent un premier étrier, ou groupe d'étriers, (13) s'étendant autour de la première barre (5), et un deuxième étrier, ou groupe d'étriers, (15) s'étendant autour de la deuxième barre (11), ces premier et second étriers ou groupe d'étriers présentant une forme en berceau avec des ouvertures orientées suivant des directions différentes,
- les premier et second étriers, ou groupes d'étriers, (13,15) sont intégrés au support d'affichage (10,30,40),
- et le deuxième étrier, ou deuxième groupe d'étriers, (15) présente, dans l'état du support d'affichage porté par le chariot roulant, soit une ouverture (15a) orientée vers l'extérieur, à la manière donc d'une fourchette, soit une forme en crochet (150,151,152) crochetant la seconde barre 11.

3. Ensemble selon la revendication 2, **caractérisé en ce que** les premier et second étriers, ou groupes d'étriers, (13,15,151,152) sont monoblocs avec le plateau d'affichage (17,35,45).

4. Ensemble selon la revendication 2 ou 3, **caractérisé en ce que**, en position engagée des étriers, ou groupes d'étriers, (13, 15) autour des barres (5, 11), ces premier et second étriers, ou groupe d'étriers, sont calés par dessus vis-à-vis de leur barre correspondante, vers le fond de leur ouverture (13a, 15a), chacune alors dirigée vers le bas.

5. Ensemble selon l'une quelconque des revendications 2 à 4, **caractérisé en ce que** l'ouverture (13a) du premier étrier, ou groupe d'étriers, (13) est dirigée vers l'opposé du plateau d'affichage.

6. Ensemble selon l'une quelconque des revendications 2 à 5, **caractérisé en ce que** le plateau d'affichage, d'une part, et les premier et second étriers ou groupe d'étriers (13,15), d'autre part, s'étendent sensiblement l'un dans un premier plan, les autres dans un second plan, ces deux plans étant concourants en un sommet et définissant entre eux un angle non nul, le deuxième étrier ou groupe d'étriers étant situé à une extrémité du second plan, avec une ouverture dirigée sensiblement dans ce plan, l'ouverture (13a) du premier étrier ou groupe d'étriers étant dirigée vers l'extérieur, transversalement par rapport à celle (15a) du second.

7. Ensemble selon l'une quelconque des revendications 2 à 5 **caractérisé en ce que** le plateau d'affichage, d'une part, et les premier et second étriers ou groupe d'étriers, d'autre part, s'étendent sensiblement l'un dans un premier plan, les autres dans un second plan, ces deux plans (13A,16A) étant concourants en un sommet et définissant entre eux un angle non nul, la zone d'intersection entre les deux plans réservant une ouverture (38,47) pour le passage des mains de l'utilisateur, de manière qu'il puisse agripper la première barre de poignée (5) en passant à travers cette ouverture du support.

8. Ensemble selon l'une quelconque des revendications 6 ou 7, **caractérisé en ce que** les premier et second plans (13A,16A) forment entre eux sensiblement un V dont la convexité est orientée vers l'utilisateur du chariot lorsque les premier et second (groupes d') étriers sont disposés autour des première et seconde barres (5, 11), avec le premier plan du plateau (17) situé alors au-dessus du second plan des étriers.

9. Ensemble selon l'une au moins des revendications 2 à 8, **caractérisé en ce que**:
- le support (10) comprend deux panneaux (17, 19) d'affichage formant entre eux un angle et réunis ensemble par un sommet, en définissant ainsi une cornière sensiblement en L, l'un au moins de ces panneaux définissant ledit plateau d'affichage,
- et les étriers sont portés par au moins un bras transversal (27) reliant fixement entre eux lesdits panneaux (17, 19), à l'écart du sommet.

10. Ensemble selon l'une au moins des revendications 2 à 9, **caractérisé en ce qu'**il comprend des moyens (29) de blocage coopérant avec l'un et/ou l'autre des étriers (13, 15) pour retenir, de manière malgré tout séparable, le support d'affichage (10) vis à vis du chariot, lesdits moyens de blocage comprenant une épingle (29) adaptée pour être engagée dans des orifices (31a, 31b) ménagés dans des ailes (13b, 13c) du premier étrier et prolongeant celui-ci au-delà de la première barre de poignée (5) du chariot engagée dans l'étrier (13), l'épingle coopérant avec cet étrier pour fixer de manière séparable le support d'affichage au chariot.

11. Support d'affichage, pour l'affichage d'un message, en particulier un message publicitaire, sur un chariot (1) roulant, le support (10,300) d'affichage comprenant :
- au moins un plateau d'affichage (17,35,41,55,305) où est situé le message à présenter,
- des moyens (13,15,315a,315b,317a,317b) de liaison entre le support et le chariot.

12. Support d'affichage selon la revendication 11, **caractérisé en ce que** :
- lesdits moyens de liaison comprennent un premier et un deuxième étriers, ou groupe d'étriers, (13,15) présentant respectivement une forme en berceau,
- les premier et second étriers, ou groupes d'étriers, (13,15) sont intégrés au support d'affichage (10,30,40),
- et le deuxième étrier, ou deuxième groupe d'étriers, (15) présente soit une ouverture (15a) orientée vers l'extérieur, à la manière donc d'une fourchette, soit une forme en crochet (150,151,152) adaptée pour crocheter une barre (11) d'un chariot roulant de supermarché.

13. Support d'affichage selon la revendication 11, **caractérisé en ce qu'**il se présente comme une structure en au moins deux dimensions présentant au moins une ligne de pliage (307a,307b,309).
